# EUROPÄISCHE PATENTANMELDUNG

(11) **EP 0 799 975 A2**
(43) Veröffentlichungstag der Anmeldung: **08.10.1997**
(21) Anmeldenummer: 97810143.4
(22) Anmeldetag: 13.03.1997
(51) Int. Cl.: F01D 25/16

(54) **Lagerabstützung für schnellaufende Rotoren**

(30) Priorität: 04.04.1996 DE 19613471
(71) Anmelder: ASEA BROWN BOVERI AG, 5400 Baden (CH)
(72) Erfinder: Bättig, Josef, 5704 Egliswil (CH)
(74) Vertreter: Liebe, Rainer

(57) **Zusammenfassung**

Aufgabe der Erfindung ist es, eine verbesserte Lagerabstützung für schnellaufende Rotoren zu schaffen, mit welcher die Standzeit der Lagereinrichtung erhöht und sowohl deren Fertigungskosten als auch der Montageaufwand gesenkt werden. Erfindungsgemäss wird das dadurch gelöst, dass die Lagerabstützung (10) einteilig ausgebildet ist. Sie besteht aus einem mit dem Gehäuse (2) verbundenen Aussenflansch (11), einem Kardanring (12) und einer inneren, das bzw. die Lager (3) aufnehmenden Lagerbüchse (13). Sowohl zwischen dem Kardanring (12) und dem Aussenflansch (11) als auch zwischen dem Kardanring (12) und der Lagerbüchse (13) ist jeweils ein Umfangsschlitz (14, 15) ausgebildet. Der Kardanring (12) ist über zwei innere sowie zwei äussere, den jeweiligen Umfangsschlitz (14, 15) unterbrechende Stege (16, 17) mit der Lagerbüchse (13) bzw. dem Aussenflansch (11) verbunden. Der Ringspalt (25) ist zwischen der Lagerbüchse (13) und dem Gehäuse (2) ausgebildet und axial versetzt zum Kardanring (12) angeordnet. Sowohl am Aussenflansch (11) als auch am Gehäuse (2) ist jeweils zumindest eine Zentrierfläche (22, 23) miteinander korrespondierend und konzentrisch zu dem/den Lager/n (3) angeordnet.

## Beschreibung

### Technisches Gebiet

Die Erfindung betrifft eine Lagerabstützung für die Radialund Axiallager schnellaufender Rotoren, insbesondere für die Lagerung von Turboladerwellen, bestehend aus zwischen zumindest einem Lager sowie einem Lagerflansch angeordneten und der radialen Abstützung des bzw. der Lager dienenden Bauteilen.

### Stand der Technik

Auf schnellaufende Rotoren, wie beispielsweise die Wellen von Turboladern, wirken grosse Axial- und Radialkräfte ein, welche von entsprechend ausgebildeten und angeordneten Axialbzw. Radiallagern aufgenommen werden. Zudem müssen für einen störungsfreien Betrieb sowohl die radialen Rotorschwingungen als auch eventuelle Schieflagen des Rotors kompensiert werden.

Aus der DE-OS 26 28 828 ist eine Lagerung für rotierende Maschinenteile, insbesondere für Wellen von Turboladern bekannt, bei der die Axialkräfte auf der Verdichterseite des Turboladers mittels zweier, eine Tandemanordnung aufweisender Kugellager aufgenommen werden. Die radiale und axiale Abstützung dieser Kugellager erfolgt jeweils über Pakete von Dämpferblechen. Durch die Anordnung der Dämpfungspakete werden eventuelle Unwuchten der Rotorwelle in den Lagern aufgefangen.

Diese Lösung weist jedoch eine nichtlineare Federkennlinie auf, was eine undefinierte Feder-/Dämpfungscharakteristik zur Folge hat. Daher können die Lagerkräfte bei bestimmten Betriebsbedingungen unzulässig hoch werden. Ausserdem entsteht bei radialen Wellenbewegungen ein unerwünschter Verschleiss im axialen Dämpferblechpaket. Die genannten Nachteile können somit zu einer Verringerung der Standzeit der Lageranordnung führen.

Aus dem EP-B1-01 43 950 ist eine weitere Lagereinrichtung für Abgasturbolader mit Tandem-Wälzlagern bekannt. Bei dieser Lösung lässt sich mit Hilfe mehrerer, über den Umfang der Lager angeordneter, zylindrischer Federstäbe eine lineare Federkennlinie realisieren. Die Lagereinrichtung weist zudem zwei separate Dämpfungssysteme auf, welche jeweils eine Dämpfung der Radialschwingungen bewirken. Dazu ist das erste Dämpfungssystem als Quetschöldämpfer mit einem entsprechenden Ringspalt ausgebildet. Das zweite Dämpfungssystem ist eine Reibungsdämpfungseinrichtung mit einem an der äusseren Stirnfläche des Wälzlageraussenrings anliegenden Dämpfungsring und einer daran anschliessenden Tellerfeder.

Bei dieser Lösung verschleissen jedoch nicht nur die Kontaktfläche von Lagerflansch und Aussenring des Wälzlagers sondern vor allem die Kontaktstellen der Tellerfeder zum Dämpfungsring, weil vor allem dort die Übertragung der Axiallast des Rotors auf die Lagerabstützung erfolgt. Dadurch ist die Dämpfung in radialer Richtung nicht mehr ausreichend gewährleistet, was zu einer steigenden Lagerbelastung bis hin zum Ausfall des Turboladers führen kann. Ausserdem besteht die Lagereinrichtung aus einer Vielzahl von Bauteilen, welche sehr genau gefertigt werden müssen. Somit entstehen einerseits relativ hohe Fertigungskosten und zum anderen ist eine zeitaufwendige Montage der Lagereinrichtung erforderlich.

Beide Lösungen weisen den gemeinsamen Nachteil auf, dass sie entweder keine oder nur geringfügige Wellenschiefstellungen ausgleichen können.

### Darstellung der Erfindung

Die Erfindung versucht, alle diese Nachteile zu vermeiden. Ihr liegt die Aufgabe zugrunde, eine verbesserte Lagerabstützung für schnellaufende Rotoren zu schaffen, mit welcher die Standzeit der Lagereinrichtung erhöht und sowohl deren Fertigungskosten als auch der Montageaufwand gesenkt werden.

Erfindungsgemäss wird dies dadurch erreicht, dass bei einer Vorrichtung gemäss dem Oberbegriff des Anspruchs 1 die Lagerabstützung einteilig ausgebildet ist. Sie besteht aus einem mit dem Gehäuse verbundenen Aussenflansch, einem Kardanring und einer inneren, das bzw. die Lager aufnehmenden Lagerbüchse. Sowohl zwischen dem Kardanring und dem Aussenflansch als auch zwischen dem Kardanring und der Lagerbüchse ist jeweils ein Umfangsschlitz ausgebildet. Der Kardanring ist über zwei innere sowie zwei äussere, den jeweiligen Umfangsschlitz unterbrechende Stege mit der Lagerbüchse bzw. dem Aussenflansch verbunden. Der Ringspalt des Quetschöldämpfers ist zwischen der Lagerbüchse und dem Gehäuse ausgebildet und axial versetzt zum Kardanring angeordnet. Am Aussenflansch und am Gehäuse ist jeweils eine Zentrierfläche ausgebildet. Die Zentrierflächen korrespondieren miteinander und sind konzentrisch zu dem/den Lager/n angeordnet.

Die Vorteile der Erfindung liegen vor allem darin begründet, dass die Lagerabstützung einteilig ausgebildet ist. Dadurch kann zwischen den einzelnen Elementen keine Reibung entstehen, so dass die Lagerabstützung völlig verschleissfrei ist. Ausserdem besitzt die Lagerabstützung, respektive der Kardanring, eine lineare Federkennlinie, d.h. eine genau definierte Federsteifigkeit. Demzufolge lassen sich die auftretenden Lagerkräfte vorherbestimmen, so dass die Lagerung entsprechend den Anforderungen ausgelegt werden kann. Damit kann die Standzeit der Lageranordnung erhöht werden. Aufgrund der einteiligen Ausbildung der Lagerabstützung können sowohl die Fertigungskosten als auch die Montagezeiten wesentlich gesenkt werden.

Beim Betrieb des Rotors werden letztlich alle auf die Lagerung einwirkenden Kräfte über die Lagerabstützung auf das Gehäuse übertragen. Die notwendige radiale und winklige Nachgiebigkeit der Lagerabstützung wird mittels des Kardanrings erreicht. Entscheidend dafür ist, dass der Kardanring unter Axiallast eine Radialbewegung ausführen kann, ohne dabei Reibung zwischen den verschiedenen Elementen der Lagerabstützung zu erzeugen. Dazu ist der Aussenflansch fest mit dem Gehäuse verbunden und mittels der Zentrierflächen entsprechend zentriert angeordnet. Schliesslich wird mit Hilfe des erfindungsgemäss angeordneten Quetschöldämpfers auch eine verschleissfreie Dämpfung gewährleistet.

Es ist besonders zweckmässig, wenn die inneren Stege um 180° versetzt zueinander und die äusseren Stege um jeweils 90° zu den inneren Stegen versetzt angeordnet sind. Dadurch besitzt der Kardanring eine sehr gute Nachgiebigkeit in radialer Richtung sowie eine geringe Steifigkeit. Demzufolge lässt er sich bei entsprechender Belastung maximal in Radialrichtung verformen, ohne dabei seine Elastizität zu verlieren.

Ferner ist es vorteilhaft, wenn die Lagerbüchse aus einem über die Stege mit dem Kardanring bzw. dem Aussenflansch verbundenem ersten Büchsenteil und einem sich axial dazu erstreckenden zweiten Büchsenteil besteht, wobei der Ringspalt zwischen dem zweiten Büchsenteil und dem Gehäuse ausgebildet ist. Dadurch kann der Quetschöldämpfer, dessen Ringspalt stets zwischen einem schwingenden und einem statischen Bauteil angeordnet sein muss, auf relativ einfache Weise realisiert werden.

Der Kardanring weist über seinen gesamten Umfang eine konstante Dicke auf. Bei guter Wirkung ist damit eine relativ einfache Fertigung gewährleistet. Alternativ dazu ist die Dicke des Kardanrings im Bereich der Stege vergrössert ausgebildet. Auf diese Weise lassen sich die in diesem Bereich auftretenden Spannungen optimieren.

In einer ersten Ausgestaltungsform der Erfindung sind die Lager radial unterhalb des Quetschöldämpfers angeordnet und in einer zweiten Ausgestaltungsform direkt unterhalb des Kardanrings plaziert. Mit beiden Varianten sind unterschiedliche Montagemöglichkeiten gegeben, wobei die erste Ausgestaltungsform vor allem dann eingesetzt wird, wenn die Dämpfungskräfte grösser als die Federkräfte sind. Bei entgegengesetzter Kräfteverteilung kommt dagegen die zweite Ausgestaltungsform zur Anwendung.

Die Ölzuführung für den Ringspalt des Quetschöldämpfers besteht aus einem Druckölanschluss und einer Verbindungsbohrung, welche beide im Gehäuse angeordnet sind. Diese Lösung ist insbesondere für Einsatzfälle mit ausreichendem Bauraum geeignet, wobei vorteilhaft keine zusätzlichen Bohrungen und Dichtungen erforderlich sind. Bei radialem Platzmangel, d.h. wenn das Gehäuse nicht zugänglich ist, kann auch nur die Verbinungsbohrung im Gehäuse und der Druckölanschluss im Aussenflansch angeordnet werden.

Schliesslich ist der Aussenflansch leicht lösbar mit dem Gehäuse verbunden. Dadurch lässt sich die zum Auswechseln der/des Lager/s erforderliche Arbeitszeit weiter verringern.

### Kurze Beschreibung der Zeichnung

In der Zeichnung sind zwei Ausführungsbeispiele der Erfindung anhand der verdichterseitigen Lagerabstützung für die in Tandemanordnung ausgebildeten Axial-/Radiallager eines Abgasturboladers dargestellt. Es zeigen:
Fig. 1 einen Teillängsschnitt eines Abgasturboladers im Bereich der Lagerabstützung;
Fig. 2 eine Vorderansicht der Lagerabstützung entsprechend Fig. 1, verkleinert dargestellt;
Fig. 3 eine Darstellung entsprechend Fig. 2, in leicht abgewandelter Form;
Fig. 4 eine Darstellung entsprechend Fig. 1, jedoch in einer zweiten Ausführungsform.

Es sind nur die für das Verständnis der Erfindung wesentlichen Elemente gezeigt. Nicht dargestellt sind von der Vorrichtung beispielsweise die Verdichter- und die Turbinenseite des Abgasturboladers.

### Weg zur Ausführung der Erfindung

Der Abgasturbolader besteht im wesentlichen aus einem Rotor, mit einem Verdichterrad, einem Turbinenrad und einer gemeinsamen Welle 1 sowie aus einem Verdichtergehäuse, einem Turbinengehäuse und jeweils einem verdichterseitigen bzw. einem turbinenseitigen, als Lagergehäuse ausgebildeten Gehäuse 2. Die Lagerung der Welle 1 weist verdichterseitig zwei als Kugellager in Tandemanordnung ausgebildete Axial-/Radiallager 3 auf, welche jeweils aus einem Aussenring 4, einem Käfig 5, einem Innenring 6 und einer Anzahl von Kugeln 7 bestehen.

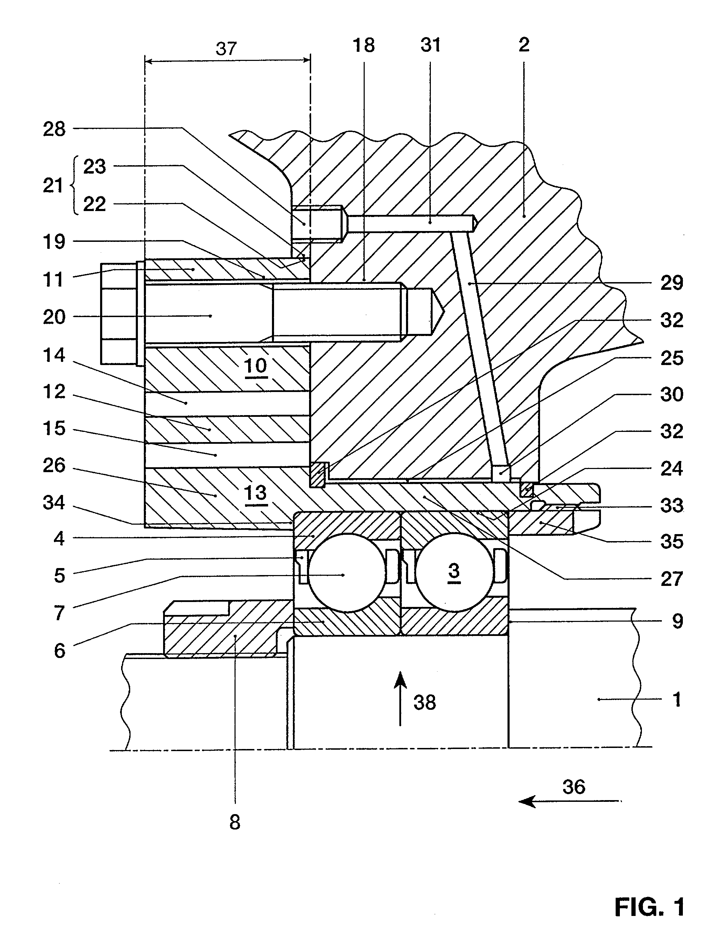

Die Befestigung der beiden Kugellager 3 auf der Welle 1 erfolgt mittels einer Mutter 8, welche diese gegen einen Wellenbund 9 presst. Zwischen dem Lagergehäuse 2 und den Kugellagern 3 ist eine einteilige Lagerabstützung 10 angeordnet. Sie besteht aus einem mit dem Lagergehäuse 2 verbundenen Aussenflansch 11, einem Kardanring 12 und einer inneren, die Kugellager 3 aufnehmenden Lagerbüchse 13. Sowohl zwischen dem Kardanring 12 und dem Aussenflansch 11 als auch zwischen dem Kardanring 12 und der Lagerbüchse 13 ist jeweils ein Umfangsschlitz 14, 15 ausgebildet (Fig. 1). Der Kardanring 12 ist über zwei innere sowie zwei äussere, den jeweiligen Umfangsschlitz 14, 15 unterbrechende Stege 16, 17 mit der Lagerbüchse 13 bzw. dem Aussenflansch 11 verbunden. Dabei sind die beiden inneren Stege 16 des Kardanrings 12 um 180° versetzt zueinander und die äusseren Stege 17 um 90° versetzt zu den inneren Stegen 16 angeordnet.

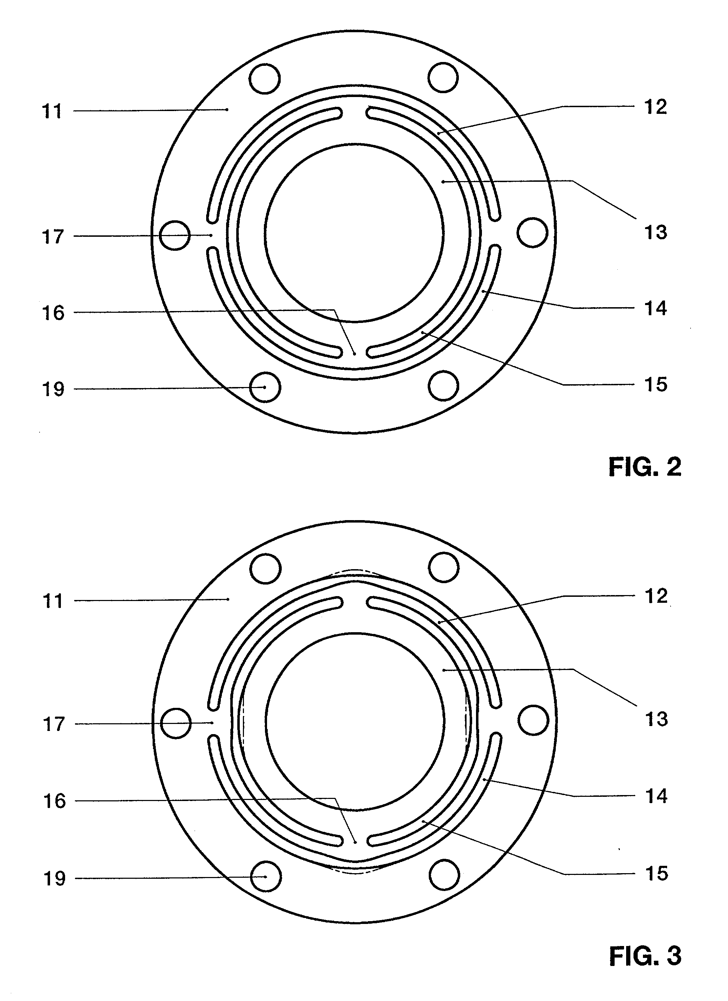

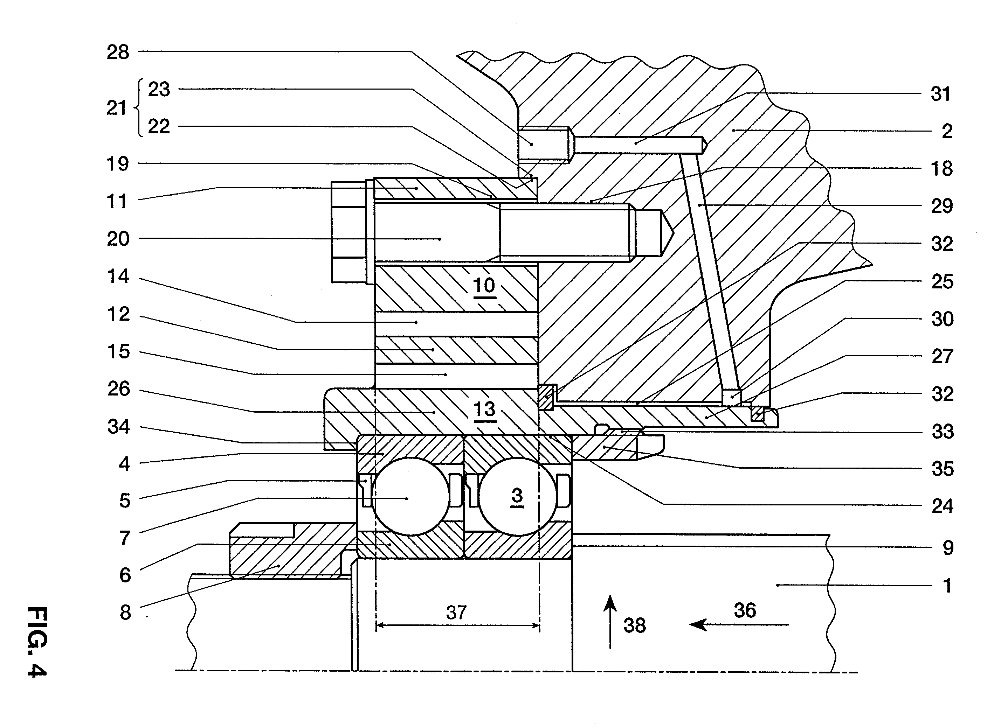

Der Kardanring 12 weist über seinen Umfang eine konstante Dicke auf und die Umfangsschlitze 14, 15 besitzen eine konstante Schlitzweite (Fig. 2). Alternativ dazu ist die Dicke des Kardanrings 12 im Bereich der Stege 16, 17 vergrössert und die Schlitzweite der Umfangsschlitze 14, 15 in diesem Bereich reduziert ausgebildet (Fig. 3). Die Ausführung der Schlitze 14, 15 kann herstellungsbedingt auch konstant (gestrichelt dargestellt) oder im Bereich der Stege 16, 17 vergrössert sein (nicht gezeigt).

Sowohl im Lagergehäuse 2 als auch im Aussenflansch 11 der Lagerabstützung 10 sind im montierten Zustand miteinander korrespondierende Gewindebohrungen 18 bzw. Befestigungsbohrungen 19 ausgebildet. Die Lagerabstützung 10 ist mittels mehrerer, in den Bohrungen 18, 19 geführter Schrauben 20 im Bereich ihres Aussenflansches 11 am Lagergehäuse 2 befestigt und über eine zylindrische Passung 21 zentriert. Dazu weist die Passung 21 jeweils eine am Aussenflansch 11 und am Lagergehäuse 2 ausgebildete Zentrierfläche 22, 23 auf. Beide Zentrierflächen 22, 23 sind konzentrisch zu einer Aussenfläche 24 der Kugellager 3 angeordnet (Fig. 1).

Zwischen der Lagerbüchse 13 und dem Lagergehäuse 2 und axial versetzt zum Kardanring 12 ist ein als Ringspalt ausgebildeter Quetschöldämpfer 25 angeordnet. Dazu besteht die Lagerbüchse 13 aus einem über die Stege 16, 17 mit dem Kardanring 12 bzw. dem Aussenflansch 11 verbundenem ersten Büchsenteil 26 und einen sich axial erstreckenden zweiten Büchsenteil 27, wobei der Ringspalt 25 zwischen dem zweiten Büchsenteil 27 und dem Lagergehäuse 2 ausgebildet ist. Im Lagergehäuse 2 ist eine aus einem Druckölanschluss 28, einer Verbindungsbohrung 29 und einem Ringkanal 30 bestehende Ölzuführung 31 angeordnet, wobei der Ringkanal 30 im axial äusseren Bereich des Ringspaltes 25 ausgebildet ist. Letzterer ist mit dem Ringkanal 30 verbunden und beidseitig mit einem Kolbenring 32 nach aussen abgedichtet.

Die Dimensionen des Ringspaltes 25, d.h. seine Breite und Höhe ergeben sich aus den für die Lagerabstützung 10 erforderlichen Dämpfungseigenschaften. Natürlich kann der Druckölanschluss 28 auch im Aussenflansch 11 der Lagerabstützung 10 angeordnet werden. Die Abdichtung des Ringspaltes 25 nach aussen kann auch mit nur einem Kolbenring 32 erfolgen. Selbstverständlich sind als Alternative auch O-Ringe geeignet.

Entsprechend den konkreten Betriebsbedingungen kann die Art und/oder die Anzahl der verwendeten Lager 3 differieren. Beispielsweise ist der Einsatz von nur einem oder auch von drei Lagern 3 möglich, wobei diese als einfache Kugel- oder Wälzlager, aber auch als Gleitlager ausgebildet werden können. Ausserdem kann eine solche Lagerabstützung 10 auch bei der nicht dargestellten turbinenseitigen Lagerung der Welle 1 eingesetzt werden.

In einem ersten Ausführungsbeispiel der Erfindung sind die Kugellager 3 radial unterhalb des Quetschöldämpfers 25 angeordnet. Dazu ist der zweite Büchsenteil 27 radial zwischen dem Lagergehäuse 2 und den Kugellagern 3 ausgebildet. Er weist einen geringeren Innendurchmesser als der erste Büchsenteil 26 auf und trägt im Bereich seines turbinenseitigen Endes ein Innengewinde 33. Der erste Büchsenteil 26 besitzt eine axiale Schulter 34, gegen welche die Kugellager 3 von einer mit dem Innengewinde 33 des zweiten Büchsenteils 27 verschraubten Mutter 35 gepresst werden. Dabei entsteht zwischen der Lagerabstützung 10 und den Kugellagern 3 eine formschlüssige Verbindung, welche keine Relativbewegung beider Bauteile zulässt.

Beim Betrieb des Abgasturboladers werden die auftretenden Axialkräfte 36 somit formschlüssig vom Wellenbund 9 auf die Kugellager 3 und von dort über die Schulter 34 auf die Lagerbüchse 13 geleitet. Aufgrund der einteiligen Ausbildung der Lagerabstützung 10 werden die Axialkräfte 36 vollkommen verschleissfrei über den Kardanring 12, die Stege 16, 17 und den Aussenflansch 11 auf das Lagergehäuse 2 übertragen. Dabei ist der Kardanring 12 axial möglichst steif, d.h. mit einer ausreichenden Länge 37 ausgebildet, so dass er die im Betrieb auftretenden Axialkräfte 36 des Abgasturboladers ohne nennenswerte Deformationen aufnimmt. Grundsätzlich kann gesagt werden, dass mit zunehmender Länge 37 des Aussenflanschs 11, des Kardanrings 12 und des ersten Büchsenteils 26 der Lagerbüchse 13 eine zunehmende axiale Steifigkeit der Lagerabstützung 10 erreicht wird und somit grössere Axialkräfte 36 aufgenommen werden können. Die auftretenden Radialkräfte 38 sowie Schiefstellungen der Welle 1 werden auf analoge Weise wie die Axialkräfte 36 aufgenommen.

Dabei ermöglichen erst die vier um jeweils 90° versetzten Stege 16, 17 eine ausreichende radiale Nachgiebigkeit des Kardanrings 12. Bezüglich Schiefstellungen ist der Kardanring 12 möglichst weich, d.h. in radialer Richtung relativ dünn ausgebildet. Damit kann er die unterschiedlichen Winkelstellungen der Welle 1 durch elastisches Verdrehen und Verbiegen in sich ausgleichen. Zudem weist der Kardanring 12 eine genau definierte, lineare, radiale Federsteifigkeit auf, so dass die gewünschte Feder-Dämpfer-Charakteristik der Lagerung erreicht wird. Bei Verwendung eines im Bereich der Stege 16, 17 verdickten Kardanrings 12, können die in diesem Bereich auftretenden Spannungen besser reduziert werden, als das mit einem Kardanring 12 konstanter Dicke möglich ist.

Die Versorgung des Quetschöldämpfers 25 mit Öl erfolgt beispielsweise von der mit dem Abgasturbolader verbundenen Brennkraftmaschine aus, über eine nicht dargestellte Ölpumpe, den Druckölanschluss 28, die Verbindungsbohrung 29 und den Ringkanal 30. In letzterem verteilt sich das Öl gleichmässig über den Umfang, so dass der Ringspalt 25 ausreichend mit Drucköl versorgt wird. Ist der Ringspalt 25 beidseitig mit Kolbenringen 32 abgedichtet, kann der zur Dämpfung erforderliche Ölverbrauch relativ gering gehalten werden, wobei die Kühlwirkung vergleichsweise niedrig ist. Demgegenüber erfordert ein nur einseitig abgedichteter Ringspalt 25 ein bis zum Zehnfachen erhöhten Ölverbrauch, hat jedoch eine verbesserte Kühlwirkung zur Folge. Der Quetschöldämpfer 25 und die Kugellager 3 werden separat mit Öl versorgt. Natürlich kann die Ölversorgung des Quetschöldämpfers 25 auch mit einer herkömmlichen, nicht dargestellten Eigen- oder Fremdschmierung der Kugellager 3 kombiniert werden.

In einem zweiten Ausführungsbeispiel der Erfindung sind die Lager 3 axial so versetzt zum ersten Ausführungsbeispiel angeordnet, dass sie direkt unterhalb des Kardanrings 12 plaziert sind. Damit ist eine weitere Montagemöglichkeit gegeben, welche bei entsprechenden Bedingungen genutzt werden kann.

### Bezugszeichenliste

- 1: Welle
- 2: Gehäuse, Lagergehäuse
- 3: Lager, Axial-/Radiallager, Kugellager
- 4: Aussenring
- 5: Käfig
- 6: Innenring
- 7: Kugel
- 8: Mutter
- 9: Wellenbund
- 10: Lagerabstützung
- 11: Aussenflansch, von 10
- 12: Kardanring, von 10
- 13: Lagerbüchse, von 10
- 14: Umfangsschlitz
- 15: Umfangsschlitz
- 16: Steg, innerer
- 17: Steg, äusserer
- 18: Bohrung, Gewindebohrung, von 2
- 19: Bohrung, Befestigungsbohrung, von 11
- 20: Schraube
- 21: Passung, zylindrisch
- 22: Zentrierfläche, von 11
- 23: Zentrierfläche, von 2
- 24: Aussenfläche, von 3
- 25: Quetschöldämpfer, Ringspalt
- 26: Büchsenteil, erster
- 27: Büchsenteil, zweiter
- 28: Druckölanschluss
- 29: Verbindungsbohrung
- 30: Ringkanal
- 31: Ölzuführung
- 32: Kolbenring
- 33: Innengewinde, von 27
- 34: Schulter, von 26
- 35: Mutter, von 27
- 36: Axialkraft
- 37: Länge, von 12
- 38: Radialkraft

## Patentansprüche

1. Lagerabstützung für schnellaufende Rotoren, insbesondere für die Lagerung von Turboladerwellen, welche in einem Gehäuse (2) angeordnet ist und zumindest ein Lager (3) gegenüber dem Gehäuse (2) radial abstützt, wobei zwischen letzterem und der Lagerabstützung (10) ein mit einer Ölzuführung (31) verbundener, als Quetschöldämpfer dienender Ringspalt (25) ausgebildet ist, dadurch gekennzeichnet, dass
a) die Lagerabstützung (10) einteilig ausgebildet ist,
b) die Lagerabstützung (10) aus einem mit dem Gehäuse (2) verbundenen Aussenflansch (11), einem Kardanring (12) und einer inneren, das bzw. die Lager (3) aufnehmenden Lagerbüchse (13) besteht,
c) sowohl zwischen dem Kardanring (12) und dem Aussenflansch (11) als auch zwischen dem Kardanring (12) und der Lagerbüchse (13) jeweils ein Umfangsschlitz (14, 15) ausgebildet ist,
d) der Kardanring (12) über zwei innere sowie zwei äussere, den jeweiligen Umfangsschlitz (14, 15) unterbrechende Stege (16, 17) mit der Lagerbüchse (13) bzw. dem Aussenflansch (11) verbunden ist,
e) der Ringspalt (25) zwischen der Lagerbüchse (13) und dem Gehäuse (2) ausgebildet und axial versetzt zum Kardanring (12) angeordnet ist,
f) sowohl am Aussenflansch (11) als auch am Gehäuse (2) jeweils zumindest eine Zentrierfläche (22, 23) miteinander korrespondierend und konzentrisch zu dem/den Lager/n (3) angeordnet ist.

2. Lagerabstützung nach Anspruch 1, dadurch gekennzeichnet, dass die inneren Stege (16) um 180° versetzt zueinander und die äusseren Stege (17) um jeweils 90° zu den inneren Stegen (16) versetzt angeordnet sind.

3. Lagerabstützung nach Anspruch 1 oder 2, dadurch gekennzeichnet, dass die Lagerbüchse (13) aus einem über die Stege (16, 17) mit dem Kardanring (12) bzw. dem Aussenflansch (11) verbundenem ersten Büchsenteil (26) und einem sich axial dazu erstreckenden zweiten Büchsenteil (27) besteht, wobei der Ringspalt (25) zwischen dem zweiten Büchsenteil (27) und dem Gehäuse (2) ausgebildet ist.

4. Lagerabstützung nach Anspruch 3, dadurch gekennzeichnet, dass der Kardanring (12) über seinen gesamten Umfang mit einer konstante Dicke ausgebildet ist.

5. Lagerabstützung nach Anspruch 3, dadurch gekennzeichnet, dass der Kardanring (12) im Bereich der Stege (16, 17) radial verdickt ausgebildet ist.

6. Lagerabstützung nach Anspruch 4 oder 5, dadurch gekennzeichnet, dass das/die Lager (3) radial unterhalb des Kardanrings (12) angeordnet ist/sind.

7. Lagerabstützung nach Anspruch 4 oder 5, dadurch gekennzeichnet, dass das/die Lager (3) radial unterhalb des Quetschöldämpfers (25) angeordnet ist/sind.

8. Lagerabstützung nach einem der Ansprüche 1 bis 7, dadurch gekennzeichnet, dass die Ölzuführung (31) für den Ringspalt (25) im Gehäuse (2) angeordnet ist und aus einem Druckölanschluss (28), einer Verbindungsbohrung (29) sowie einem Ringkanal (30) besteht.

9. Lagerabstützung nach einem der Ansprüche 1 bis 7, dadurch gekennzeichnet, dass die Ölzuführung (31) für den Ringspalt (25) aus einem Druckölanschluss (28), einer Verbindungsbohrung (29) und einem Ringkanal (30) besteht, wobei der Druckölanschluss (28) im Aussenflansch (11) und die Verbindungsbohrung (29) sowie der Ringkanal (30) im Gehäuse (2) angeordnet ist/sind.

10. Lagerabstützung nach einem der Ansprüche 1 bis 9, dadurch gekennzeichnet, dass der Aussenflansch (11) leicht lösbar mit dem Gehäuse (2) verbunden ist.
